# EUROPEAN PATENT APPLICATION

(11) **EP 4 744 748 A1**
(43) Date of publication of application: **20.05.2026**
(21) Application number: 24855233.3
(22) Date of filing: 29.02.2024
(51) Int. Cl.: A63F 13/803, A63F 13/57, A63F 13/40

(54) **VEHICLE-MOUNTED GAME CONTROL METHOD, VEHICLE, USER EQUIPMENT AND STORAGE MEDIUM**

(30) Priority: 18.08.2023 CN 202311050414
(71) Applicant: ZTE Corporation, Shenzhen, Guangdong 518057 (CN)
(72) Inventor: CHEN, Xiao, Shenzhen, Guangdong 518057 (CN)
(74) Representative: Ziebig Hengelhaupt Intellectual Property Attorneys Patentanwaltskanzlei PartGmbB
(86) International application number: PCT/CN2024/079245
(87) International publication number: WO 2025/039502

(57) **Abstract**

Embodiments of the present disclosure provide a vehicle-mounted game control method, a vehicle, a user equipment and a storage medium. The vehicle-mounted game control method comprises: receiving an enable instruction for a game mode of a vehicle; in response to the enable instruction for the game mode, acquiring state information of the vehicle; and when the state information indicates that the vehicle is in a non-driving state, controlling the vehicle to enter the game mode.

## Description

The present disclosure claims priority to the Chinese patent application No. 202311050414.0, filed on August 18, 2023, the entire content of which is incorporated into the present disclosure by reference.

### TECHNICAL FIELD

The present disclosure relates to the technical field of vehicle-mounted games, and in particular to a vehicle-mounted game control method, a vehicle, user equipment and a storage medium.

### BACKGROUND

With the rapid development of intelligent vehicle technologies, people's lives are becoming more and more convenient. Moreover, the computing capability of the vehicle-mounted device is increasing continuously, and the vehicle has been no longer just a single transportation tool, but may also carry more and more entertainment functions. In addition to the radio, music and video playback, and navigation functions that the traditional vehicle-mounted device has, there are also functions such as vehicle-mounted games, etc., which further enrich the user's traveling life.

### SUMMARY

In a first aspect, the present disclosure provides a vehicle-mounted game control method, which is applied to a vehicle, and includes:
receiving an enabling instruction for a game mode of the vehicle;
acquiring state information of the vehicle, in response to the enabling instruction for the game mode; and
controlling the vehicle to enter the game mode, in response that the state information indicates that the vehicle is in a non-driving state.

In a second aspect, the present disclosure also provides another vehicle-mounted game control method, the method is applied to a user equipment, and the user equipment is connected to a vehicle, and the method includes:
running a vehicle-mounted game of the vehicle in response that the vehicle is in a game mode;
receiving game control information sent from the vehicle, the game control information including a maneuvering instruction for the vehicle-mounted game; and
performing the maneuvering instruction on the vehicle-mounted game according to the game control information.

In a third aspect, the present disclosure further provides a vehicle-mounted game control apparatus, the vehicle-mounted game control apparatus is applied to a vehicle, and includes:
a receiving module, configured to receive an enabling instruction for a game mode of the vehicle;
the receiving module, further configured to acquire state information of the vehicle, in response to the enabling instruction for the game mode; and
a processing module, further configured to control the vehicle to enter the game mode, in response that the state information indicates that the vehicle is in a non-driving state.

In a fourth aspect, the present disclosure further provides another vehicle-mounted game control apparatus, the vehicle-mounted game control apparatus is applied to user equipment, and includes:
a processing module, configured to run a vehicle-mounted game of a vehicle in response that the vehicle is in a game mode;
a receiving module, configured to receive game control information sent from the vehicle, the game control information including a maneuvering instruction for the vehicle-mounted game; and
the processing module, further configured to perform the maneuvering instruction on the vehicle-mounted game according to the game control information.

In a fifth aspect, the present disclosure further provides a vehicle, including: a memory and a processor; the memory is coupled to the processor; the memory is configured to store instructions executable by the processor; and the processor, when executing the instructions, performs the method as provided in the first aspect.

In a sixth aspect, the present disclosure further provides a user equipment, including: a memory and a processor; the memory is coupled to the processor; the memory is configured to store instructions executable by the processor; and the processor, when executing the instructions, performs the method as provided in the second aspect.

In a seventh aspect, the present disclosure provides a computer program product including computer instructions, and the computer instructions, when executed on a computer, cause the computer to perform any method provided in the first second or the second aspect above.

### BRIEF DESCRIPTION OF THE DRAWINGS

The drawings are used to provide a further understanding of technical solutions of the present disclosure and form a part of the specification, are used in conjunction with the embodiments of the present disclosure to explain the technical solutions of the present disclosure, and do not constitute a limitation on the technical solutions of the present disclosure.
FIG. 1 is a schematic diagram of an architecture of a vehicle-mounted game control system provided in the embodiments of the present disclosure.
FIG. 2 is a flowchart of a vehicle-mounted game control method provided in the embodiments of the present disclosure.
FIG. 3 is an example diagram of a display mode of a game screen provided in the embodiments of the present disclosure.
FIG. 4 is an example diagram of another display mode of a game screen provided in the embodiments of the present disclosure.
FIG. 5 is an example diagram of yet another display mode of a game screen provided in the embodiments of the present disclosure.
FIG. 6 is a flowchart of another vehicle-mounted game control method provided in the embodiments of the present disclosure.
FIG. 7 is a flowchart of yet another vehicle-mounted game control method provided in the embodiments of the present disclosure.
FIG. 8 is a flowchart of another vehicle-mounted game control method provided in the embodiments of the present disclosure.
FIG. 9 is an example diagram of yet another display mode of a game screen provided in the embodiments of the present disclosure.
FIG. 10 is a compositional schematic diagram of a vehicle-mounted game control apparatus provided in the embodiments of the present disclosure.
FIG. 11 is a compositional schematic diagram of another vehicle-mounted game control apparatus provided in the embodiments of the present disclosure.
FIG. 12 is a structural schematic diagram of a vehicle-mounted game control apparatus provided in the embodiments of the present disclosure.

### DETAILED DESCRIPTION

The following will describe the technical solutions in the embodiments of the present disclosure clearly and completely, in conjunction with the drawings in the embodiments of the present disclosure, and obviously, the described embodiments are only a part of the embodiments of the present disclosure, not all of the embodiments. Based on the embodiments of the present disclosure, all other embodiments obtained by those ordinary skilled in the art without making inventive efforts fall within the scope of protection of the present disclosure.

In the description of the present disclosure, unless otherwise specified, the symbol "/" means "or", and for example, A/B may represent A or B. Herein, "and/or" is only used to describe an associated relationship between associated objects, representing that there may be three relationships, and for example, A and/or B may represent three cases: only A, only B, and both A and B. Additionally, "at least one" means one or more, and "multiple/plurality of" means two or more. The words such as "first", "second", etc., do not limit the number and execution order, and the words such as "first", "second", etc., do not necessarily limit different terms.

It should be noted that in the present disclosure, the words such as "exemplary (exemplarily)" or "for example (such as, e.g.)", etc., are used to represent examples, explanations, or illustrations. Any embodiment or design solution described with "exemplary (exemplarily)" or "for example (such as, e.g.)", etc., in the present disclosure should not be interpreted as being more preferred or advantageous than other embodiments or design solutions. Specifically, the use of the words such as "exemplary (exemplarily)" or "for example (such as, e.g.)", etc., is intended to present related concepts in some manners.

In order to improve the safety of a vehicle running a vehicle-mounted game, the embodiments of the present disclosure provide a vehicle-mounted game control method, which includes: receiving an enabling instruction for a game mode of the vehicle; acquiring state information of the vehicle, in response to the enabling instruction for the game mode; and controlling the vehicle to enter the game mode, in response that the state information indicates that the vehicle is in a non-driving state. In this way, when a user wants to enable the game mode, it may first determine the driving mode of the vehicle, and allow to run the game mode if the vehicle is in a non-driving state, so that it may avoid misoperation on the vehicle during driving and improve the safety of the vehicle.

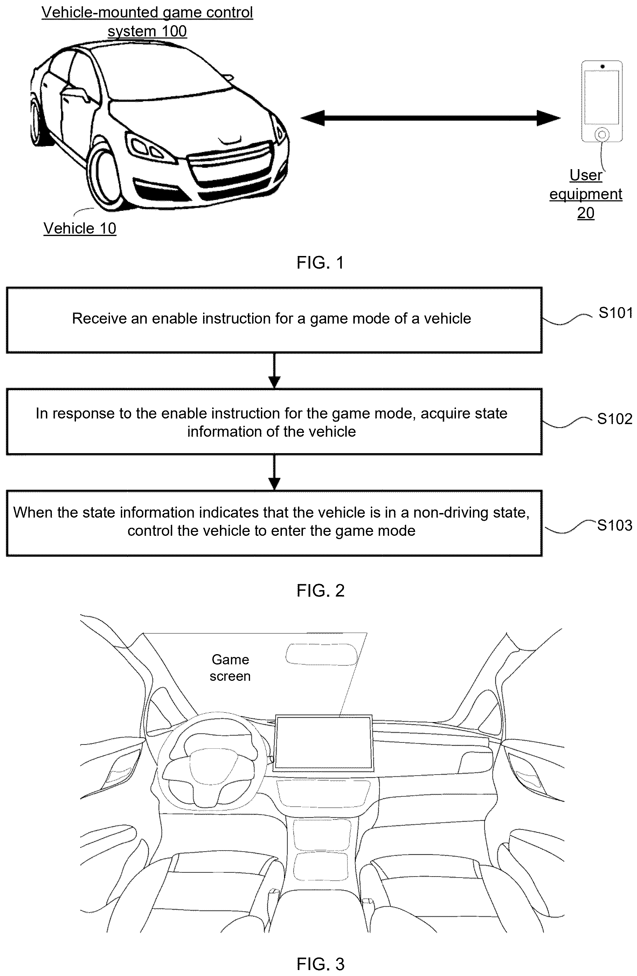

FIG. 1 is a vehicle-mounted game control system provided in the embodiments of the present disclosure, as shown in FIG. 1, a vehicle-mounted game control system 100 includes a vehicle 10 and a user equipment (UE) 20. The vehicle 10 and the user equipment 20 are capable of communicating with each other.

In some embodiments, the vehicle 10 may include a control assembly, a first vehicle-mounted hardware, a second vehicle-mounted hardware, and the like. The control assembly may be connected to the first vehicle-mounted hardware and the second vehicle-mounted hardware, respectively, to control the first vehicle-mounted hardware and the second vehicle-mounted hardware. In some embodiments, the number of vehicles 10 may be multiple.

Exemplarily, the first vehicle-mounted hardware may be understood as an input human-machine interface for the vehicle-mounted game, which may include at least one of a steering assembly, a power assembly, a chassis assembly, and a vehicle body assembly of the vehicle. For example, the steering assembly may include a steering wheel, and a button/knob attached to the steering wheel, and the like. The power assembly may include a pedal, such as a gas pedal/accelerator, a brake, a clutch pedal, and the like. The vehicle body assembly may include a seat, a direction lever, a wiper lever, an air conditioner, a window, a light, a visor, and the like. In some embodiments, the chassis assembly may include various assemblies in the brake system such as a brake pedal.

In addition, the second vehicle-mounted hardware may be understood as an output human-machine interface for the vehicle-mounted game, which may include at least one of a cabin assembly, a vehicle body assembly, a safety assembly, and a chassis assembly of the vehicle. For example, the cabin assembly of the vehicle may include a display assembly, a sound assembly, and the like. The safety assembly may include a seat belt and the like. The chassis assembly may also include a suspension mechanism and the like.

In some embodiments, the vehicle 10 may also include a communication assembly, and for example, the communication assembly may be an ultra wide band (UWB) module for implementing a communication connection between the user equipment 20 and the vehicle 10.

In some embodiments, the vehicle 10 may have more or fewer assemblies. For example, the vehicle 10 may also include more assemblies such as a travelling assembly, a transmission assembly, a sensor, a positioning assembly, a radar, and the like.

In some embodiments, the user equipment 20 may be a terminal device, which may also be referred to as a terminal, a mobile platform, a mobile terminal, and the like. The user equipment 20 may be, for example, a terminal device, such as a mobile phone, a tablet computer, a desktop, a laptop, a handheld computer, a notebook computer, an ultra-mobile personal computer (UMPC), a netbook, and the like. In some embodiments, the number of user equipment 20 may be multiple.

It can be understood that the system architecture shown in FIG. 1 does not constitute a limitation on the embodiments of the present disclosure, and it may include more or fewer devices or components than those shown in the figure, or combine some components, or have a different arrangement for the components, for example, the vehicle-mounted game control system may include only the vehicle.

The method provided in the present disclosure is exemplarily described below in conjunction with the drawings of the specification.

As shown in FIG. 2, the embodiments of the present disclosure provide a vehicle-mounted game control method, which includes the following contents.

S101, receiving an enabling instruction for a game mode of a vehicle.

The enabling instruction for the game mode is used to indicate the vehicle to enter the game mode. Exemplarily, when a user wants to enable a vehicle-mounted game function of the vehicle, the user may input the enabling instruction for the game mode to the vehicle.

In an example, the user may input a related operation for enabling the game mode to the vehicle, so that the vehicle may receive the enabling instruction for the game mode. Exemplarily, the user may click a "game mode button", and the "game mode button" may be a physical button provided inside the vehicle, or a "game mode" control displayed on a display interface of the vehicle head unit. Alternatively, the user may input a voice such as "turning on the game mode" or "enabling the game mode" to the vehicle, so that the vehicle may receive the enabling instruction for the game mode. The embodiments of the present disclosure do not limit the specific implementation of the operation of the user to enable the game mode.

In another example, the user may input a related operation for enabling the game mode to the user equipment, the user equipment is communicatively connected to the vehicle, and in response to the operation, the user equipment may send an enabling instruction for the game mode to the vehicle, and accordingly, the vehicle may receive the enabling instruction for the game mode.

S102, acquire state information of the vehicle, in response to the enabling instruction for the game mode.

In some embodiments, the state information of the vehicle may include a running mode of the vehicle, a driving speed, state information of each vehicle-mounted assembly, such as gas pedal opening information, brake pedal opening information, steering wheel steering angle information, and the like. Furthermore, based on the state information of the vehicle, it may be determined whether the vehicle is in a driving state.

In some embodiments, the running mode of the vehicle may include a game mode, a driving mode, a theater mode, an office mode, a user-defined mode, or other possible modes. The user may control the vehicle to enter the corresponding running mode based on his or her needs, and the state information of the vehicle may also include mode information of the current running mode of the vehicle.

It should be noted that since in the game mode of the vehicle, the vehicle-mounted hardware of the vehicle may be used to indicate maneuvering instructions corresponding to the game. Thereby, in actual implementations, if the game mode is enabled while the vehicle is in a driving state, the operation of the user for the vehicle-mounted hardware is used to indicate the maneuvering instruction corresponding to the game, and the driving instruction cannot be normally inputted to the vehicle, which may affect driving safety. Thereby, in the technical solutions provided in the embodiments of the present disclosure, after the vehicle receives the enabling instruction for the game mode, the vehicle will not immediately enter the game mode, instead, it first acquires the state information of the vehicle, to determine whether it can enter the game mode based on the state information, which avoids entering the game mode while in the driving state, so that the safety of the vehicle running the vehicle-mounted game may be improved.

S103, control the vehicle to enter the game mode, in response that the state information indicates that the vehicle is in a non-driving state.

In some embodiments, it may first determine whether the vehicle is in a driving state based on the state information, and then control the vehicle to enter the game mode in response that the vehicle is in the non-driving state.

Exemplarily, it may be determined whether the vehicle is in the driving state, based on the running mode, the driving speed, and state information of each vehicle-mounted assembly, in the state information of the vehicle. For example, if the running mode of the vehicle is a theater mode, and the driving speed is zero within a preset length of time prior to the current moment, it may be determined that the vehicle is in a non-driving state. Furthermore, the vehicle may be controlled to enter the game mode.

In some embodiments, identity authentication may also be performed on the user within the vehicle. For example, identity authentication information of the user within the vehicle may be acquired in response that the vehicle is in the non-driving state. Then, based on the identity authentication information of the user, the identity authentication is performed on the user, and in response that the user passes the identity authentication, the vehicle is controlled to enter the game mode.

In an example, identity information of one or more users may be stored in the vehicle, and the identity information may include one or more of facial information, fingerprint information, or iris information. Furthermore, in response that the vehicle is in a non-driving state, the vehicle may collect one or more of the facial information, the fingerprint information, or the iris information of the user within the vehicle, as the identity authentication information of the user. Thereby, in response that the identity authentication information of the user in the vehicle is matched with identity information of any user stored in the vehicle, it may be determined that the user in the vehicle passes the identity authentication, that is, the vehicle may be controlled to enter the game mode. In some embodiments, in response that a similarity between the identity authentication information of the user in the vehicle and identity information of one of the users stored in the vehicle is greater than or equal to a preset threshold, it may be determined that the user in the vehicle passes the identity authentication. Exemplarily, the similarity may be determined based on one or more of facial information, fingerprint information, or iris information of the user.

In another example, the vehicle may send the acquired identity authentication information of the user to (user equipment of) a preset user of the vehicle, and in response to receiving an identity determining instruction sent from the preset user, may determine that the user in the vehicle passes the identity authentication, and then, the vehicle may be controlled to enter the game mode.

In some embodiments, an available computing power resource may be allocated to the vehicle-mounted game of the vehicle. The available computing power resource includes a computing power resource that is idle in the vehicle and/or a computing device associated with the vehicle.

Exemplarily, the computing power resource of the vehicle may include occupied computing power resources and idle computing power resources of the vehicle. The available computing power resources of the vehicle may include idle computing power resources in the intelligent driving, intelligent cabin, and general control.

The vehicle may acquire its own computing power resource information in real time, i.e., acquiring the occupied computing power resource information and the available computing power resource information in real time, and when the vehicle enters the game mode, it may perform resource scheduling based on the computing power demand of the vehicle-mounted game that is currently running, and allocate a suitable computing power resource to the vehicle-mounted game function. In some embodiments, the available computing power resources of the vehicle may also include computing power resources that are idle in a computing device associated with the vehicle. For example, they are computing power resources of a terminal device associated with the vehicle, cloud computing power resources, computing power resources of other vehicles whose vehicle-mounted computing power can be shared, and the like. Thereby, the vehicle may acquire its own computing power resource information and/or computing power resource information in the computing device associated with the vehicle in real time, and then, allocate its own idle computing power resources and/or idle computing power resources in the computing device associated with the vehicle to the vehicle-mounted game function.

In some embodiments, the computing power resources may also be allocated to the driving domain and/or the cabin domain based on the position demand of the user.

It should be noted that in recent years, with the development of intelligent internet connected vehicle technologies, the computing power and communication capabilities configured for the vehicle have been rapidly improved, some mid-end and high-end vehicles with driving automation capabilities have higher computing power and communication capabilities, and these vehicle-mounted computing power and communication capabilities may be used for the intelligent driving system and the simple multimedia entertainment system (e.g., navigation and radio broadcasting) while in a driving state. However, the vehicle is in the driving state for a relatively short period of time, and in the non-driving state for most of the time. Thereby, based on the method provided in the embodiments of the present disclosure, in response that the vehicle is in the non-driving state, the vehicle-mounted game function of the vehicle may be provided to the user, suitable computing power resources may be allocated to the vehicle-mounted game function, and the vehicle may flexibly allocate the computing power resources to the driving domain and the cabin domain based on the user's demand, so that the utilization ratio of the strong computing power and communication capabilities configured for the vehicle may be improved.

In some embodiments, the vehicle-mounted game may be running on the vehicle and/or user equipment connected to the vehicle, when the vehicle enters the game mode.

In a possible implementation, when the vehicle enters the game mode, the vehicle may run a vehicle-mounted game selected by the user, based on an instruction input by the user.

In some embodiments, the vehicle may receive a first operation on a first vehicle-mounted hardware of the vehicle. Then, it determines a maneuvering instruction of the user for the vehicle-mounted game of the vehicle according to a first correspondence and the first operation. The first correspondence is used to indicate a correspondence between an operation on the first vehicle-mounted hardware and the maneuvering instruction for the vehicle-mounted game.

In some embodiments, the first vehicle-mounted hardware of the vehicle may include at least one of a steering assembly, a power assembly, a chassis assembly, and a vehicle body assembly of the vehicle. For example, the steering assembly may include a steering wheel, and a button/knob attached to the steering wheel, and the like. The power assembly may include a pedal, such as a gas pedal/accelerator, a brake, a clutch pedal, and the like. The vehicle body assembly may include a seat, a direction lever, a wiper lever, an air conditioner, a window, a light, a visor, and the like.

In some embodiments, the maneuvering instruction includes at least one of a vehicle driving instruction, a character action instruction, and a skill releasing instruction in the vehicle-mounted game; where the vehicle driving instruction includes a moving instruction, an accelerating instruction, an impact instruction, or a drifting instruction.

In some embodiments, the vehicle may acquire a game type of the vehicle-mounted game, and then determine the first correspondence according to the game type of the vehicle-mounted game.

In some embodiments, the type of the vehicle-mounted game may include a racing-type game, an action-type game, a board-type game, and the like.

Exemplarily, the vehicle may pre-store a plurality of first correspondences, where a type of vehicle-mounted game may correspond to at least one first correspondence, and the first correspondences corresponding to different types of vehicle-mounted games may not be the same, e.g., in a first correspondence of a racing-type game, for the first operation on the first vehicle-mounted hardware such as operations of operating the gas pedal, and/or the brake pedal, and/or the steering wheel, the maneuvering instruction corresponding to the operation may be a vehicle driving instruction in the racing-type game. Alternatively, in a first correspondence of an action-type game, for the first operation on the first vehicle-mounted hardware such as operations of operating the gas pedal, and/or the brake pedal, and/or the steering wheel, the maneuvering instruction corresponding to the operation may be a character action instruction or a skill releasing instruction, etc., in the action-type game.

In some embodiments, the first correspondence may be preset by the game software, or user-defined or determined in other possible ways.

It should be noted that when the vehicle is in the game mode, the instruction corresponding to the operation of the user for the first vehicle-mounted hardware may be adjusted to adapt to the game mode, that is, the vehicle may detect the gas pedal opening information, the brake pedal opening information, the steering wheel steering angle information, the steering wheel angular acceleration information, or any other possible state information of the first vehicle-mounted hardware, and maneuver the vehicle-mounted game based on the state information. In this way, the vehicle-mounted hardware may be used as a human-computer interface for the game, to implement the maneuvering function of the game, thereby expanding the capability of the vehicle-mounted unit to control the game, and improving the game experience of the user, without increasing additional hardware costs.

In some embodiments, the maneuvering instruction of the user for the vehicle-mounted game of the vehicle may also be determined based on the operation of the user on the vehicle head unit, such as swiping, clicking, and other operations on the display of the vehicle head unit. Alternatively, the maneuvering instruction of the user for the vehicle-mounted game of the vehicle may also be determined based on the operation of the user on an assembly (such as a gamepad, and other components) external to the vehicle head unit.

In some embodiments, game scene data of the vehicle-mounted game of the vehicle may also be acquired, and a game scene signal outputted from a second vehicle-mounted hardware of the vehicle may be determined according to the game scene data, and then, the game scene signal may be outputted by the second vehicle-mounted hardware.

In some embodiments, the second vehicle-mounted hardware includes at least one of a cabin assembly, a vehicle body assembly, a safety assembly, and a chassis assembly of the vehicle. For example, the cabin assembly of the vehicle may include a display assembly, a sound assembly, and the like. The safety assembly may include a seat belt and the like. The chassis assembly may include a suspension mechanism and the like.

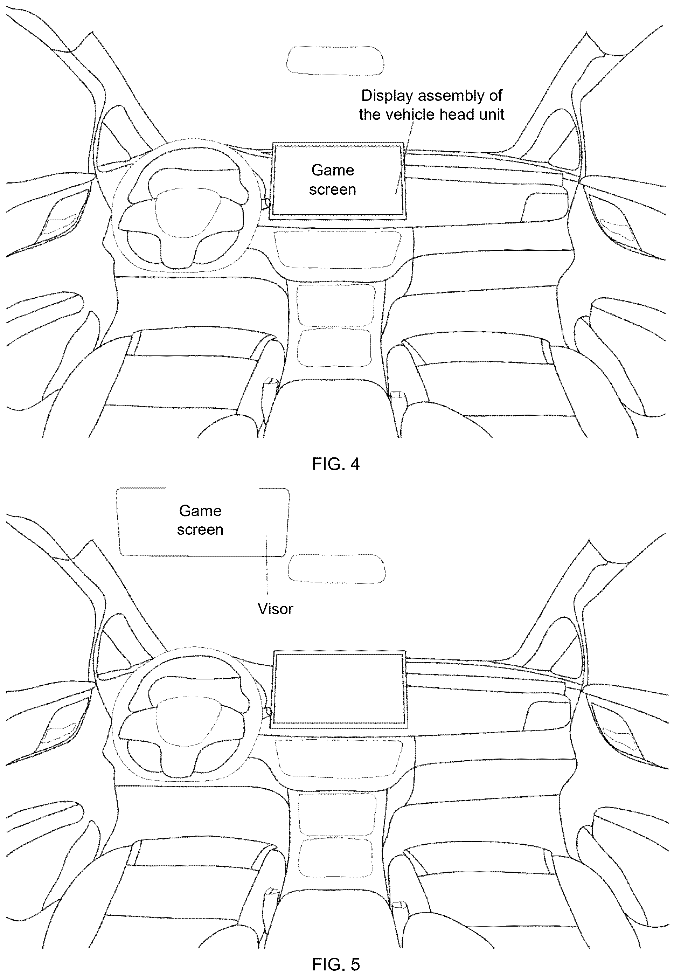

Exemplarily, as shown in FIG. 3, the game screen may be displayed by the cabin display assembly, and the game sound effect may be output by the sound assembly, the temperature and the like in the vehicle may be adjusted based on environment information in the game scene, and taking a racing-type game as an example, the safety assembly and the like may also be adjusted based on the information such as the racing speed, etc. In some embodiments, as shown in FIG. 4, the game screen may also be displayed by the display assembly of the vehicle head unit, or as shown in FIG. 5, the game screen may also be displayed by the vehicle body display assembly, such as a visor.

In some embodiments, it may also acquire an initial state of the second vehicle-mounted hardware before entering the game mode, and adjust the second vehicle-mounted hardware to the initial state in response that the vehicle exits the game mode.

Exemplarily, the vehicle may record the current state of each vehicle-mounted assembly, i.e., the initial state described above, when the vehicle is about to enter the game mode. Furthermore, when the user stops the vehicle-mounted game function of the vehicle, it may indicate the vehicle to exit the game mode, and in this case, the vehicle may adjust the second vehicle-mounted hardware based on the state information of each vehicle-mounted assembly in the initial state. In this way, the adjusted state of the second vehicle-mounted hardware before entering the game mode may be restored without the need for the user to adjust it again, and furthermore, the inconvenience is avoided that is caused by the state of the vehicle-mounted hardware in the game mode being not applicable to the driving mode, and the user experience is improved.

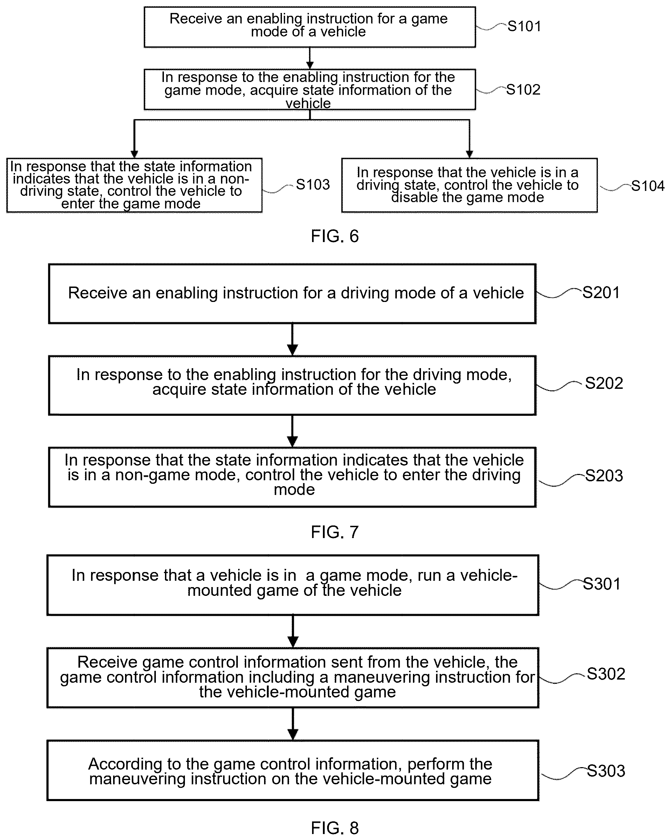

In some embodiments, as shown in FIG. 6, the method may further include S104: controlling the vehicle to disable the game mode in response that the vehicle is in a driving mode.

It should be noted that in response that the vehicle is in the driving state, the vehicle may be controlled not to enter the game mode and maintain the current driving state. And, the game mode may also be disabled, so that it may be avoided that the operation of the user on the vehicle-mounted hardware is used to indicate the maneuvering instruction corresponding to the game, and that the driving instruction can not be inputted to the vehicle normally, thereby affecting the driving safety.

In some embodiments, in response that the vehicle is in the driving state, prompt information for disabling the game mode is issued.

Exemplarily, the prompt information for disabling the game mode may be textual prompt information such as "disabling the game mode in the driving state" or the like displayed by the vehicle on the display of the vehicle head unit and/or a graphic information for disabling the game mode displayed on the display of the vehicle head unit, or the prompt information for disabling the game mode may also be voice prompt information such as "disabling the game mode in the driving state" or the like outputted by the sound assembly of the vehicle, or the prompt information such as a sound, display information, or the like may be also output on the user equipment connected to the vehicle.

Based on the technical solutions provided in the present disclosure, when the user wants to enable the game mode, it may first determine the driving mode of the vehicle, and allow to run the game mode if the vehicle is in the non-driving state, so that it may avoid misoperation of the game of the vehicle during the driving, and improve the safety of the vehicle. In addition, the present disclosure also provides that in the game mode, the vehicle-mounted unit is used as a human-computer interface for the game to implement the maneuvering function for the game. In this way, the capability of the vehicle-mounted unit to control the game may be expanded, to improve the game experience of the user, without additional hardware costs.

In some embodiments, as shown in FIG. 7, the vehicle-mounted game control method provided in the embodiments of the present disclosure may further include the following steps.

S201, receive an enabling instruction for a driving mode of the vehicle.

The enabling instruction for the driving mode is used to indicate the vehicle to enter the driving mode. Exemplarily, when the user wants to enable a vehicle-mounted driving function of the vehicle, the user may input the enabling instruction for the driving mode to the vehicle.

Exemplarily, the user may input a related operation for enabling the driving mode to the vehicle, so that the vehicle may receive the enabling instruction for the driving mode. Exemplarily, the user may click a "driving mode button", and the "driving mode button" may be a physical button provided inside the vehicle, or a "driving mode" control displayed on a display interface of the vehicle head unit. Alternatively, the user may input a voice such as "turning on the driving mode" or "enabling the driving mode" to the vehicle, so that the vehicle may receive the enabling instruction for the driving mode. The embodiments of the present disclosure do not limit the specific implementation of the operation of the user to enable the driving mode.

S202, in response to the enabling instruction for the driving mode, acquire state information of the vehicle.

An exemplary description for the state information of the vehicle may refer to the related description in the above step S102, and will not be repeated herein.

It should be noted that since in the game mode of the vehicle, the vehicle-mounted hardware of the vehicle may be used to indicate maneuvering instructions corresponding to the game, so in actual implementations, if the driving mode is enabled while the vehicle is in a game state, the operation of the user for the vehicle-mounted hardware may not be able to input the driving instruction to the vehicle normally, thereby possibly affecting the driving safety. Thereby, in the technical solutions provided in the embodiments of the present disclosure, after the vehicle receives the enabling instruction for the driving mode, the vehicle will not immediately enter the driving mode, instead, first acquires the state information of the vehicle, to determine whether the driving mode can be entered based on the state information, so that the safety of the vehicle may be improved.

S203, control the vehicle to enter the driving mode in response that the state information indicates that the vehicle is in a non-game mode.

In some embodiments, when the vehicle enters the driving mode, an available computing power resource may be allocated to the vehicle function of the vehicle in the driving mode. The vehicle function include one or more of intelligent driving, intelligent cabin, and vehicle general control.

In some embodiments, a second operation on the first vehicle-mounted hardware of the vehicle may be received. Furthermore, a driving instruction of the user for the vehicle is determined according to a second correspondence and the second operation. The second correspondence is used to indicate a correspondence between an operation on the first vehicle-mounted hardware and the driving instruction for the vehicle.

In some embodiments, identity authentication may also be performed on the user within the vehicle. For example, identity authentication information of the user within the vehicle may be acquired in response that the vehicle is in the non-game state. Then, based on the identity authentication information of the user, the identity authentication is performed on the user, and in response that the user passes the identity authentication, the vehicle is controlled to enter the driving mode.

In some embodiments, the vehicle may be controlled to disable the driving mode in response that the state information indicates that the vehicle is in the game mode.

Based on the technical solutions provided in the present disclosure, when the user wants to enable the driving mode, it may first determine the state information of the vehicle, and allow to enter the driving mode when the vehicle is in a non-game state, which may avoid the forward movement or other driving operations of the vehicle during the game, and improve the safety of the vehicle.

In some embodiments, the embodiments of the present disclosure also provide another vehicle-mounted game control method, which is applied to user equipment, as shown in FIG. 8, and the method includes the following steps.

S301, run a vehicle-mounted game of the vehicle in response that the vehicle is in a game mode.

In some embodiments, when the vehicle enters the game mode, the user may run the vehicle-mounted game selected by the user based on an instruction input by the user.

S302, receive game control information sent from the vehicle, the game control information including a maneuvering instruction for the vehicle-mounted game.

In some embodiments, the vehicle may send the game control information including the maneuvering instruction to the user equipment. The game control information is used to indicate to perform the maneuvering instruction on the vehicle-mounted game running on the user equipment.

In some embodiments, the game control information may be information determined by the vehicle based on a first operation for the first vehicle-mounted hardware. An exemplary process for the vehicle to determine the game control information based on the first operation for the first vehicle-mounted hardware may refer to in the related description above and will not be repeated herein.

In some embodiments, the user may also input game control information on the user equipment.

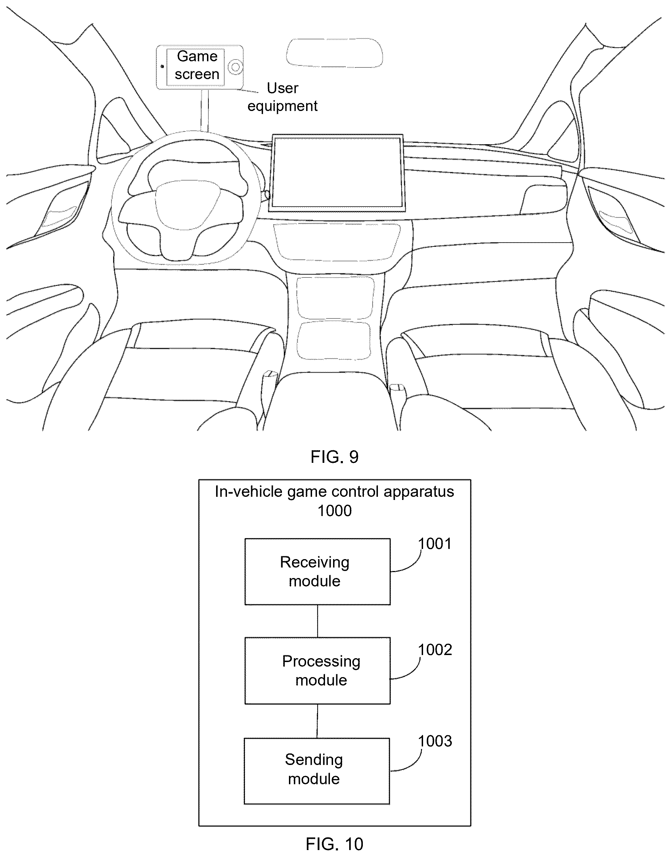

In some embodiments, a game screen may also be displayed on the user equipment, as shown in FIG. 9.

In some embodiments, the user equipment may also send screen casting information containing a game screen to the vehicle. Thereby, the vehicle may receive the screen casting information containing the game screen sent from the user equipment, and based on the screen casting information, perform screen casting of the game screen.

In some embodiments, as shown in FIG. 3, FIG. 4, or FIG. 5, the vehicle may perform screen casting of the game screen on the cabin display assembly and/or the vehicle body display assembly of the vehicle, based on the screen casting information.

S303, perform the maneuvering instruction on the vehicle-mounted game according to the game control information.

Based on the technical solutions provided in the present disclosure, it is also possible to run the vehicle-mounted game on the user equipment, so that the vehicle and the user equipment may be used together to complete the game control, thereby improving the game experience of the user.

The above introduces the solutions provided by the present disclosure mainly from the perspective of interaction between various devices or nodes. It can be understood that, in order to implement the above functions, the various devices or nodes contain corresponding hardware structures and/or software modules for performing various functions. Those skilled in the art should easily realize that, in conjunction with the exemplary algorithm steps described in the embodiments disclosed herein, the present disclosure can be implemented in the form of hardware or a combination of hardware and computer software. Whether a certain function is performed via the hardware or the computer software-driven hardware depends on the specific application and restrictive conditions of design of the technical solutions. Professional technicians may use different methods to implement the described functions for each specific application, but such implementation should not be considered beyond the scope of the present disclosure.

FIG. 10 is a compositional schematic diagram of a vehicle-mounted game control apparatus provided in the embodiments of the present disclosure. As shown in FIG. 10, the vehicle-mounted game control apparatus 1000 is applied to a vehicle and includes a receiving module 1001, and a processing module 1002. In some embodiments, the vehicle-mounted game control apparatus 1000 may also include a sending module 1003.

In some embodiments, the receiving module 1001 is configured to receive an enabling instruction for a game mode of the vehicle. The receiving module 1001 is further configured to acquire state information of the vehicle, in response to the enabling instruction for the game mode. The processing module 1002 is configured to control the vehicle to enter the game mode, in response that the state information indicates that the vehicle is in a non-driving state.

In some embodiments, the sending module 1003 is configured to send prompt information for disabling the game mode, in response that the vehicle is in a driving state.

In some embodiments, the receiving module 1001 is further configured to receive a first operation on a first vehicle-mounted hardware of the vehicle. The processing module 1002 is configured to determine a maneuvering instruction of a user for a vehicle-mounted game of the vehicle according to a first correspondence and the first operation. The first correspondence is used to indicate a correspondence between an operation on the first vehicle-mounted hardware and a maneuvering instruction for the vehicle-mounted game.

In some embodiments, the first vehicle-mounted hardware includes at least one of a steering assembly, a power assembly, a chassis assembly, and a vehicle body assembly of the vehicle.

In some embodiments, the maneuvering instruction includes at least one of a vehicle driving instruction, a character action instruction, and a skill releasing instruction in the vehicle-mounted game; where the vehicle driving instruction includes a moving instruction, an accelerating instruction, an impact instruction, or a drifting instruction.

In some embodiments, before determining the maneuvering instruction of the user for the vehicle-mounted game according to the first correspondence and the first operation, the receiving module 1001 is further configured to acquire a game type of the vehicle-mounted game. The processing module 1002 is further configured to determine the first correspondence according to the game type of the vehicle-mounted game.

In some embodiments, the sending module 1003 is configured to send game control information including the maneuvering instruction to user equipment. The game control information is used to indicate to perform the maneuvering instruction on the vehicle-mounted game running on the user equipment.

In some embodiments, the processing module 1002 is further configured to allocate an available computing power resource to a vehicle-mounted game of the vehicle. The available computing power resource includes a computing power resource that is idle in the vehicle and/or a computing device associated with the vehicle.

In some embodiments, the receiving module 1001 is further configured to receive screen casting information containing a game screen sent from user equipment. The processing module 1002 is further configured to perform screen casting of the game screen on the display assembly based on the screen casting information.

In some embodiments, the processing module 1002 may be configured to perform screen casting of the game screen on a cabin display assembly and/or a vehicle body display assembly of the vehicle, based on the screen casting information.

In some embodiments, the receiving module 1001 is further configured to acquire game scene data for the vehicle-mounted game of the vehicle. The processing module 1002 is further configured to determine a game scene signal output from a second vehicle-mounted hardware of the vehicle, according to the game scene data, and control the second vehicle-mounted hardware to output the game scene signal.

In some embodiments, the second vehicle-mounted hardware includes at least one of a cabin assembly, a vehicle body assembly, a safety assembly, and a chassis assembly of the vehicle.

In some embodiments, the receiving module 1001 is further configured to acquire an initial state of the second vehicle-mounted hardware before entering the game mode. The processing module 1002 is further configured to adjust the second vehicle-mounted hardware to the initial state, in response that the vehicle exits the game mode.

In some embodiments, the receiving module 1001 may be configured to acquire identity authentication information of a user in the vehicle, in response that the vehicle is in the non-driving state. The processing module 1002 may be further configured to perform identity authentication on the user based on the identity authentication information of the user, and control the vehicle to enter the game mode in response that the user passes the identity authentication.

In some embodiments, the receiving module 1001 is further configured to receive an enabling instruction for a driving mode of the vehicle, and acquire state information of the vehicle, in response to the enabling instruction for the driving mode. The processing module 1002 is further configured to control the vehicle to enter the driving mode, in response that the state information indicates that the vehicle is in a non-game mode.

In some embodiments, the receiving module 1001 is further configured to receive a second operation on a first vehicle-mounted hardware of the vehicle. The processing module 1002 is further configured to determine a driving instruction of a user for the vehicle according to a second correspondence and the second operation. The second correspondence is used to indicate a correspondence between an operation on the first vehicle-mounted hardware and the driving instruction for the vehicle.

In some embodiments, the processing module 1002 is further configured to allocate an available computing power resource to a vehicle function of the vehicle in the driving mode. The vehicle function includes one or more of intelligent driving, intelligent cabin, and vehicle general control.

For a more detailed description for the above-described receiving module 1001, processing module 1002, and sending module 1003, as well as a more detailed description for each technical feature therein, as well as a description for the beneficial effects, etc., reference may be made to the above-described corresponding method embodiments, which will not be repeated herein.

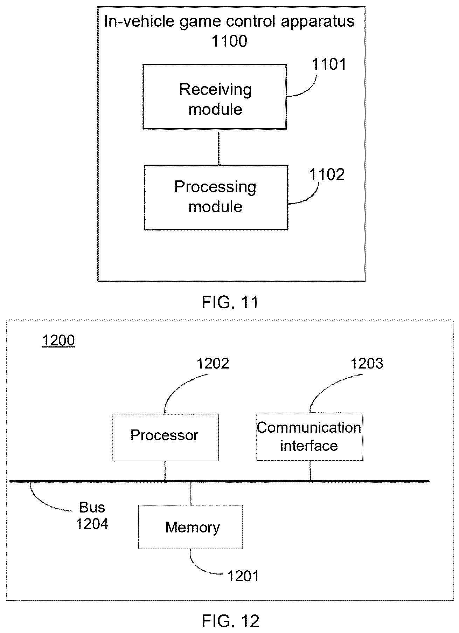

FIG. 11 is a compositional schematic diagram of another vehicle-mounted game control apparatus provided in the embodiments of the present disclosure. As shown in FIG. 11, the vehicle-mounted game control apparatus 1100 is applied to user equipment and includes a receiving module 1101 and a processing module 1102.

In some embodiments, the processing module 1102 is configured to run a vehicle-mounted game of the vehicle in response that the vehicle is in a game mode. The receiving module 1101 is configured to receive game control information sent from the vehicle, the game control information including a maneuvering instruction for the vehicle-mounted game. The processing module 1102 is further configured to perform the maneuvering instruction on the vehicle-mounted game according to the game control information.

For a more detailed description for the above-described receiving module 1101 and processing module 1102, as well as a more detailed description for each technical feature therein, as well as a description for the beneficial effects, etc., reference may be made to the above-described corresponding method embodiments, which will not be repeated herein.

It should be noted that the modules in FIG. 10 or FIG. 11 may also be referred to as units, and for example, the sending module may be referred to as a sending unit. In addition, in the embodiments shown in FIG. 10 or FIG. 11, the names of the modules may not be the names shown in the figures, and for example, the sending module may also be referred to as a communication module, and the receiving module may also be referred to as a communication module.

If each unit or module in FIG. 10 or FIG. 11 is implemented in the form of a software functional module, and sold or used as a separate product, the unit may be stored in a computer readable storage medium. Based on this understanding, the technical solutions of the embodiments of the present disclosure may be essentially, or a part of the technical solutions that contributes to the existing technology, or a part of all of the technical solutions, may be embodied in the form of a software product, and the computer software product is stored in a storage medium, and includes a plurality of instructions to cause a computer device (which may be a personal computer, a server, a network device, etc.) or processor to perform a part or all of the steps of the methods of various embodiments of the present disclosure. The storage medium storing the computer software product includes various types of medium capable of storing program codes, such as a U disk (USB flash disk), a mobile hard disk, a read-only memory (ROM), a random access memory (RAM), a magnetic disk, or an optical disk, etc.

In a case where the functions of the above integrated modules are implemented in the form of hardware, the embodiments of the present disclosure provide a structural schematic diagram of a vehicle-mounted game control apparatus, and this communication apparatus may be the above-described vehicle-mounted game control apparatus 1000 or the vehicle-mounted game control apparatus 1100. As shown in FIG. 12, the vehicle-mounted game control apparatus 1200 includes: a processor 1202, a communication interface 1203, and a bus 1204. In some embodiments of the present disclosure, the vehicle-mounted game control apparatus 1200 may also include a memory 1201.

The processor 1202 may implement or execute various illustrative logical blocks, modules and circuits described in conjunction with the contents of the present disclosure. The processor 1202 may be a central processing unit, a general-purpose processor, a digital signal processor, an application specific integrated circuit, a field programmable gate array or any other programmable logic device, a transistor logic device, a hardware component, or any combination thereof, which may implement or execute various illustrative logical blocks, modules and circuits described in conjunction with the contents of the present disclosure. The processor 1202 may also be a combination capable of implementing computing functions, for example, including a combination of one or more microprocessors, or a combination of a digital signal processor (DSP) and a microprocessor.

The communication interface 1203 is configured to connect with other devices through a communication network. The communication network may be an Ethernet, a radio access network, a wireless local area network (WLAN), or the like.

The memory 1201 may be, but is not limited to, a read-only memory (ROM) or any other type of static storage device capable of storing static information and instructions, a random access memory (RAM) or any other type of dynamic storage device capable of storing information and instructions, or an electrically erasable programmable read-only memory (EEPROM), a magnetic disk storage medium or any other magnetic storage device, or any other medium capable of being used to carry or store desired program codes and capable of being accessed by a computer, where the desired program codes have instructions or are in the form of data structure.

As a possible implementation, the memory 1201 may exist independently of the processor 1202, and the memory 1201 may be connected to the processor 1202 through the bus 1204, for storing instructions or program codes. When calling and executing the instructions or the program codes stored in the memory 1201, the processor 1202 is capable of implementing the vehicle-mounted game control method provided in the embodiments of the present disclosure.

In another possible implementation, the memory 1201 may also be integrated with the processor 1202.

The bus 1204 may be an extended industry standard architecture (EISA) bus or the like. The bus 1204 may be classified into an address bus, a data bus, and a control bus, or the like. For the convenience of representation, only one thick line is used in FIG. 12 for representation, but it does not mean that there is only one bus or one type of bus.

From the description of the above embodiments, those skilled in the art can clearly understand that, for convenience and brevity of description, an illustration is only given by the division of functional modules mentioned above. In practical applications, the functions mentioned above may be allocated to be completed by different functional modules according to requirements. That is, the internal structure of the device or apparatus is divided into different functional modules to complete all or a part of the functions mentioned above.

The embodiments of the present disclosure further provide a computer-readable storage medium ( e.g., the computer-readable storage medium includes a non-transitory computer readable storage medium). All or a part of the procedures in the method embodiments mentioned above may be completed by related hardware indicated by computer instructions, and the program may be stored in the computer-readable storage medium mentioned above. The program, when executed, may include the procedures of the method embodiments mentioned above. The computer readable storage medium may be or a memory of the device or apparatus of any one of the aforementioned embodiments. The above-mentioned computer readable storage medium may also be an external storage device of the device or apparatus mentioned above, e.g., a plug-in hard disk, a smart memory card (smart media card, SMC), a secure digital (SD) card, a flash card, etc., equipped on the device or apparatus mentioned above. Furthermore, the computer-readable storage medium mentioned above may further include both an internal storage unit and an external storage device of the device or apparatus mentioned above. The computer-readable storage medium mentioned above is used to store the computer program mentioned above, and other programs and data required for the device or apparatus mentioned above. The computer-readable storage medium mentioned above may further be used to temporarily store data that has been output or is to be output.

The embodiments of the present disclosure further provide a computer program product, the computer product contains a computer program, the computer program product, when executed on a computer, causes the computer to perform any one of the methods provided in the above embodiments.

Although the present disclosure is described herein in conjunction with respective embodiments, other variations of the disclosed embodiments may be understood and implemented by those skilled in the art by viewing the drawings, the disclosed content, and the attached claims, in the process of implementing the claimed processes of the present disclosure. In the claims, the word "comprise/comprises/comprising" does not exclude other components or steps, and "a/an" or "one" does not exclude multiple cases. A single processor or other unit may implement functions of several items listed in the claims. Although certain measures are recorded in dependent claims different from each other, it does not mean that these measures cannot be combined to exert a good effect.

Although the present disclosure is described in conjunction with exemplary features and embodiments thereof, it is apparent that various modifications and combinations may be made thereto without departing from the spirit and scope of the present disclosure. Accordingly, the specification and drawings are merely exemplary explanations of the present disclosure as defined by the attached claims and are deemed to cover any and all modifications, variations, combinations or equivalents thereof within the scope of the present disclosure. Obviously, those skilled in the art may make various changes and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations therein.

The above is merely specific implementations of the present disclosure, but the protection scope of the present disclosure is not limited thereto. Any change or replacement within the technical scope disclosed in the present disclosure shall be included in the protection scope of the present disclosure. Therefore, the protection scope of the present disclosure should be based on the protection scope of the claims.

## Claims

1. A vehicle-mounted game control method, **characterized by** being applied to a vehicle, the method comprising:
receiving an enabling instruction for a game mode of the vehicle;
acquiring state information of the vehicle, in response to the enabling instruction for the game mode; and
controlling the vehicle to enter the game mode, in response that the state information indicates that the vehicle is in a non-driving state.

2. The method according to claim 1, further comprising:
sending prompt information for disabling the game mode, in response that the vehicle is in a driving state.

3. The method according to claim 1, further comprising:
receiving a first operation on a first vehicle-mounted hardware of the vehicle;
determining a maneuvering instruction of a user for a vehicle-mounted game of the vehicle according to a first correspondence and the first operation; the first correspondence being used to indicate a correspondence between an operation on the first vehicle-mounted hardware and a maneuvering instruction for the vehicle-mounted game.

4. The method according to claim 3, wherein the first vehicle-mounted hardware comprises at least one of a steering assembly, a power assembly, a chassis assembly, and a vehicle body assembly of the vehicle.

5. The method according to claim 3, wherein the maneuvering instruction comprises at least one of a vehicle driving instruction, a character action instruction, and a skill releasing instruction in the vehicle-mounted game; wherein the vehicle driving instruction comprises a moving instruction, an accelerating instruction, an impact instruction, or a drifting instruction.

6. The method according to claim 5, wherein before determining the maneuvering instruction of the user for the vehicle-mounted game according to the first correspondence and the first operation, the method further comprises:
acquiring a game type of the vehicle-mounted game;
determining the first correspondence according to the game type of the vehicle-mounted game.

7. The method according to claim 3, further comprising:
sending game control information comprising the maneuvering instruction to user equipment; the game control information being used to indicate to perform the maneuvering instruction on the vehicle-mounted game running on the user equipment.

8. The method according to claim 1, further comprising:
allocating an available computing power resource to a vehicle-mounted game of the vehicle; wherein the available computing power resource comprises a computing power resource that is idle in the vehicle and/or a computing device associated with the vehicle.

9. The method according to claim 1, further comprising:
receiving screen casting information containing a game screen sent from user equipment; and
performing screen casting of the game screen based on the screen casting information.

10. The method according to claim 9, wherein performing screen casting of the game screen based on the screen casting information, comprises:
performing screen casting of the game screen on a cabin display assembly and/or a vehicle body display assembly of the vehicle, based on the screen casting information.

11. The method according to claim 3, further comprising:
acquiring game scene data for the vehicle-mounted game of the vehicle;
determining a game scene signal output from a second vehicle-mounted hardware of the vehicle, according to the game scene data; and
outputting the game scene signal by the second vehicle-mounted hardware.

12. The method according to claim 11, wherein the second vehicle-mounted hardware comprises at least one of a cabin assembly, a vehicle body assembly, a safety assembly, and a chassis assembly of the vehicle.

13. The method according to claim 11, further comprising:
acquiring an initial state of the second vehicle-mounted hardware before entering the game mode; and
adjusting the second vehicle-mounted hardware to the initial state, in response that the vehicle exits the game mode.

14. The method according to claim 1, wherein controlling the vehicle to enter the game mode, in response that the state information indicates that the vehicle is in the non-driving state, comprises:
acquiring identity authentication information of a user in the vehicle, in response that the vehicle is in the non-driving state;
performing identity authentication on the user based on the identity authentication information of the user; and
controlling the vehicle to enter the game mode in response that the user passes the identity authentication.

15. The method according to claim 1, further comprising:
receiving an enabling instruction for a driving mode of the vehicle;
acquiring state information of the vehicle, in response to the enabling instruction for the driving mode; and
controlling the vehicle to enter the driving mode, in response that the state information indicates that the vehicle is in a non-game mode.

16. The method according to claim 15, further comprising:
receiving a second operation on a first vehicle-mounted hardware of the vehicle; and
determining a driving instruction of a user for the vehicle according to a second correspondence and the second operation; the second correspondence being used to indicate a correspondence between an operation on the first vehicle-mounted hardware and the driving instruction for the vehicle.

17. The method according to claim 15, further comprising:
allocating an available computing power resource to a vehicle function of the vehicle in the driving mode; wherein the vehicle function comprises one or more of intelligent driving, intelligent cabin, and vehicle general control.

18. A vehicle-mounted game control method, **characterized in that** the method is applied to a user equipment, the user equipment is connected to a vehicle, and the method comprises:
running a vehicle-mounted game of the vehicle in response that the vehicle is in a game mode;
receiving game control information sent from the vehicle, the game control information comprising a maneuvering instruction for the vehicle-mounted game; and
performing the maneuvering instruction on the vehicle-mounted game according to the game control information.

19. A vehicle, **characterized by** comprising: a memory and a processor; wherein the memory is coupled to the processor; the memory is configured to store instructions executable by the processor; and the processor, when executing the instructions, performs the method according to any one of claims 1 to 17.

20. A user equipment, **characterized by** comprising: a memory and a processor; wherein the memory is coupled to the processor; the memory is configured to store instructions executable by the processor; and the processor, when executing the instructions, performs the method according to claim 18.

21. A computer-readable storage medium, **characterized in that** the computer-readable storage medium has stored computer instructions, and the computer instructions, when executed on a vehicle control apparatus, cause the vehicle control apparatus to perform the method according to any one of claims 1 to 18.
